(19) Europäisches Patentamt
European Patent Office
Office européen des brevets

(11) Veröffentlichungsnummer: **0 236 382**
**B1**

(12) **EUROPÄISCHE PATENTSCHRIFT**

(45) Veröffentlichungstag der Patentschrift: **12.09.90**

(51) Int. Cl.$^5$: **C 09 K 5/06**

(21) Anmeldenummer: **86905223.3**

(22) Anmeldetag: **17.09.86**

(86) Internationale Anmeldenummer:
**PCT/DE86/00369**

(87) Internationale Veröffentlichungsnummer:
**WO 87/01716 26.03.87 Gazette 87/07**

# (54) LATENTWÄRMESPEICHERMITTEL UND DESSEN VERWENDUNG.

(30) Priorität: **18.09.85 DE 3533279**

(43) Veröffentlichungstag der Anmeldung:
**16.09.87 Patentblatt 87/38**

(45) Bekanntmachung des Hinweises auf die Patenterteilung:
**12.09.90 Patentblatt 90/37**

(84) Benannte Vertragsstaaten:
**AT DE FR GB IT NL**

(56) Entgegenhaltungen:
**GB-A- 893 290**
**GB-A-2 023 280**
**US-A-4 295 517**

(73) Patentinhaber: **Hörmansdörfer, Gerd**
**Kastanieneck 6 A**
**D-3167 Burgdorf-Beinhorn (DE)**

(72) Erfinder: **Hörmansdörfer, Gerd**
**Kastanieneck 6 A**
**D-3167 Burgdorf-Beinhorn (DE)**

(74) Vertreter: **Eikenberg & Brümmerstedt**
**Patentanwälte**
**Schackstrasse 1**
**D-3000 Hannover 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 236 382 B1

**Beschreibung**

Die Erfindung betrifft ein Latentwärmespeichermittel auf der Basis von mehrwertigen aliphatischen Alkoholen der allgemeinen Formel

$$H\left[-\overset{\displaystyle H}{\underset{\displaystyle OH}{\overset{|}{\underset{|}{C}}}}-\right]_n-H \qquad (A)$$

d.h. solchen mit unverzweigter Kohlenwasserstoffkette und einer Hydroxylgruppe pro C-Atom. Weiterhin betrifft die Erfindung eine bevorzugte Verwendung dieses Mittels.

Latentwärmespeichermittel werden in zahlreichen Wärmeübertragungsprozessen als Mittel zur Wärmespeicherung eingesetzt. Sie besitzen einen im Bereich der Arbeitstemperatur des Wärmeübertragungsprozesses liegenden Schmelzpunkt, so daß sie beim Erwärmen vom festen in den flüssigen Zustand übergehen und beim Abkühlen wieder in den festen Zustand zurückkehren, also auch latente Wärme (Schmelzwärme) aufnehmen und wieder abgeben. Im Vergleich zu sog. Kapazitätswärmespeichermitteln (d.h. solchen, bei denen sich der Aggregatzustand im Bereich der Arbeitstemperatur nicht ändert, so daß nur fühlbare Wärme aufgenommen und wieder abgegeben werden kann) haben Latentwärmespeichermittel damit den Vorteil, daß sie die Speicherung einer größeren Energiemenge in einem engen Temperaturbereich bei relativ kleinem Volumenbedarf ermöglichen.

Generell sollten Latentwärmespeichermittel eine möglichst hohe Schmelzenthalpie aufweisen, wobei es besonders auf die volumenspezifische (also auf das Volumen bezogene) Schmelzenthalpie ankommt, um pro Volumeneinheit der Speicheranlage ein Höchstmaß an Speicherkapazität zu schaffen. Außerdem müssen sie zyklusfest sein, d.h. der Phasenübergang fest-flüssig-fest muß über lange Zenträume hinweg reversibel reproduzierbar bleiben und darf nicht durch chemische Umsetzungen, Entmischungen o. dgl. Vorgänge beeinträchtigt werden. Weitere wichtige Kriterien können noch das Erstarrungsverhalten (z.B. die Bildung einer metastabilen Schmelze, das Ausmaß einer Volumenänderung beim Phasenübergang oder die Kristallisationsform) sein sowie die Verträglichkeit mit den Konstruktionswerkstoffen, die physiologische Unbedenklichkeit und die Verfügbarkeit zu einem akzeptablen Preis. Es hat sich bislang als schwierig erwiesen, Latentwärmespeichermittel zu finden, bei denen die Gesamtheit dieser Kriterien in einer für den jeweiligen Anwendungsfall optimalen Weise erfüllt ist.

Viele der bisher bekannten Latentwärmespeichermittel sind zum Einsatz im Bereich der Raumheizung entwickelt worden und besitzen dementsprechend Schmelzpunkte im Brauchwasserbereich. Neben anorganischen Substanzen, wie Salzhydraten und Salzmischungen (die häufig korrosiv und wenig zyklusfest sind) sind dafür auch bereits organische Substanzen einschließlich einzelner Alkohole vorgeschlagen worden. So beschreibt die DE—A 28 56 374 die Verwendung von einfachen Alkoholen wie Stearylalkohol, Hexadecanol oder Octandiol als Latentwärmespeichermittel für Solarheizungssysteme. Die volumenspezifische Schmelzenthalpie dieser einfachen Alkohole ist wegen ihrer geringen Dichte jedoch vergleichsweise gering. Weiterhin beschreibt die DE—A 27 47 664 die Verwendung von Xylit (das ist ein Alkohol gemäß der eingangs genannten allgemeinen Formel A mit n = 5) als Latentwärmespeichermittel für Wärmepackungen oder für Heizungssysteme, die mit Solarenergie oder mit Nachtstrom arbeiten. Xylit besitzt im Vergleich zu den einfachen Alkoholen eine höhere volumenspezifische Schmelzenthalpie, bildet jedoch beim Abkühlen eine ausgeprägte metastabile Schmelze, die auch bei Raumtemperatur noch beständig ist und nur durch zusätzliche Maßnahmen wie Animpfen, Reiben oder Einwirkung von Ultraschall zur Kristallisation gebracht werden kann. Dies mag für die in der DE—A 27 47 664 vorgesehenen Anwendungsfälle zweckmäßig sein, ist es in den meisten anderen Fällen aber nicht.

Ein spezieller anderer Anwendungsfall von Latentwärmespeichermitteln ist der Einsatz in Hitzeschutzsystemen für Meßsonden in geotechnischen Tiefbohrungen. Hier geht es darum, während der meßtechnischen Befahrung eines Bohrlochs bei Spülungstemperaturen bis zu 200—300°C einen elektronischen Meßeinschub, der in einen als Dewargefäß ausgebildeten Hitzeschild eingebracht ist, über einen möglichst langen Zeitraum auf einer niedrigen Temperatur (z.B. zwischen 70 und 125°C) zu halten. Gewöhnlich werden dafür vor und hinter dem Meßeinschub patronenförmige Latentwärmesenken angebracht, die mit dem Latentwärmespeichermittel befüllt sind und in der Regel ein Gesamtvolumen von nur etwa 0,5 bis 2 Liter besitzen.

Dieser Anwendungsfall stellt Anforderungen an die Latentwärmespeichermittel, die von den im Bereich der Raumheizung bekannten Latentwärmespeichermitteln nicht erfüllt werden können. Hier werden deshalb bislang Schmelzmetalle, z.B. Wood's Metall, als Latentwärmespeichermittel verwendet. Schmelzmetalle haben jedoch den Nachteil einer hohen Dichte, die zwischen 9 und 10 $kg/dm^3$ liegt und zu einem hohen Gesamtgewicht der Latentwärmesenke führt. Dadurch wird bei Erschütterungen besonders die relativ dünne Innenwand des Hitzeschilds gefährdet. Dem läßt sich auch nicht durch eine verstärkte Innenwand des Hitzeschilds entgegenwirken, da sich dann sein Isolationswert verschlechtert. Außerdem hat eine aktuelle Untersuchung derartiger Hitzeschutzsysteme (LA—9671—HDR, G. A. Bennett, G. R. Sherman, Analysis and Thermal Design Improvements of Downhole Tools for Use in Hot Dry Wells, Los Alamos National Laboratory) ergeben, daß auch die den Schmelzmetallen eigene Wärmeleitfähigkeit ein

gravierender Nachteil ist, weil dadurch über die Latentwärmesenken ein erhöhter Wärmestrom in das Innere des Hitzeschutzsystems transportiert wird. Weiter wird in dieser Untersuchung eine gegenüber den Schmelzmetallen noch höhere Schmelzenthalpie des einzusetzenden Latentwärmespeichermittels als Voraussetzung für ein zufreidenstellend arbeitendes System genannt. Die gewichtsbezogene Schmelzenthalpie der Schmelzmetalle ist nämlich verhältnismäßig gering, so daß trotz der hohen Dichte die Werte für die volumenspezifische Schmelzenthalpie unbefriedigend bleiben. Damit liegen hier die gleichen unvorteilhaften Verhältnisse vor wie bei dem umgekehrten Fall einer höheren gewichtsbezogenen Schmelzenthalpie bei sehr geringer Dichte eines Latentwärmespeichermittels.

Somit besteht ein Bedarf an einem verbesserten Latentwärmespeichermittel insbesondere für Bohrloch-Hitzeschutzsysteme, welches bei Schmelzpunkten im Bereich zwischen etwa 50 und 150°C und mäßigen Dichten zwischen etwa 1 und 2 kg/dm$^3$ eine höchstmögliche volumenspezifische Schmelzenthalpie aufweist, eine geringe Wärmeleitfähigkeit besitzt, auch bei hohen Temperaturen (möglichst bis zum Bereich von 300°C) beständig ist und im übrigen auch die Anforderungen an die Zyklusfestigkeit, das Erstarrungsverhalten, die Verträglichkeit mit den Konstruktionswerkstoffen, die physiologische Unbedenklichkeit und die Verfügbarkeit möglichst optimal erfüllt.

Mit der Erfindung wird ein solches verbessertes Latentwärmespeichermittel zur Verfügung gestellt, und zwar erfindungsgemäß auf der Basis von mehrwertigen aliphatischen Alkoholen der allgemeinen Formel

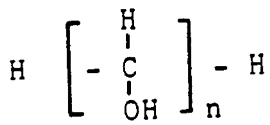

(A)

mit n = 4, 6 oder 8 und mit solcher Konfigurationsisomerie, daß eine in bezug auf die Kettenmitte symmetrische Konfiguration besteht.

Die Erfindung beruht auf der überraschenden Erkenntnis, daß Alkohole gemäß der allgemeinen Formel (A) hervorragend als Latentwärmespeichermittel insbesondere für Bohrloch-Hitzeschutzsysteme geeignet sind, wenn ihre Kettenlänge geradzahlig und zugleich ihre Konfiguration in bezug auf die Kettenmitte symmetrisch ist. Es wurde nämlich gefunden, daß die erfindungsgemäß als Latentwärmespeichermittel vorgeschlagenen Alkohole im Vergleich zu den ebenfalls unter die allgemeine Formel (A) fallenden Alkoholen mit ungeradzahliger Kettenlänge (z.B. Xylit mit n = 5) und/oder unsymmetrischer Konfiguration nicht nur eine deutlich höhere Schmelzenthalpie aufweisen, sondern auch eine deutlich geringere Unterkühlung der Schmelze besitzen und vor allem die Eigenschaft haben, während des Abkühlens bei einer bestimmten festliegenden Unterkühlungstemperatur reproduzierbar und freiwillig in den kristallinen Zustand überzugehen. Diese Phänomene waren nicht vorhersehbar und lassen sich zur Zeit auch noch nicht wissenschaftlich erklären.

Von den erfindungsgemäß als Latentwärmespeichermittel vorgeschlagenen Alkoholen sind diejenigen mit n = 4 oder 6, also die Tetrite und Hexite mit symmetrischer Konfiguration bevorzugt. Dies sind Erythrit und Threit mit n = 4 sowie Dulcit, Allit, Idit und Mannit mit n = 6. Die Konfiguration dieser bevorzugten Alkohole kann, wie in der beigefügten Tabelle 1 veranschaulicht ist, entweder spiegelsymmetrisch (Erythrit, Dulcit und Allit) oder achsensymmetrisch (Threit, Idit und Mannit) sein, jeweils bezogen auf die Kettenmitte. In der Tabelle 2 sind weiterhin die Daten für die wichtigsten dieser bevorzugten Alkohole angegeben.

Vorzugsweise werden die erfindungsgemäß als Latentwärmespeichermittel vorgeschlagenen Alkohole nicht als reine Substanzen, sondern als Mischung aus zwei oder mehr Substanzen eingesetzt, wobei zweckmäßig mindestens ein Mischungsbestandteil Spiegelsymmetrie aufweisen sollte. Es wurde gefunden, daß die Schmelzen der erfindungsgemäß vorgeschlagenen Alkohole in beliebigem Verhältnis miteinander mischbar sind und beim Abkühlen Eutektika bilden, die je nach Anzahl der Mischungsbestandteile binär, ternär oder höher sind und für die einige Beispiele ebenfalls in der Tabelle 2 angegeben sind. Durch Verwendung solcher Mischungen, die eutektisch, übereutektisch oder untereutektisch sein können, lassen sich somit tiefere Schmelztemperaturen einstellen, die allgemein im Interesse einer möglichst geringen Wärmebelastung der Meßsonde erwünscht sind. Außerdem bilden die Mischungen ein feineres und gleichmäßigeres Kristallgefüge als die reinen Substanzen, wobei bereits die Zugabe einer geringen Menge von z.B. 0,5 Mol% eines Mischungsbestandteils das Kristallgefüge vorteilhaft beeinflußt.

Ein wichtiger weiterer Vorteil der Mischungen ergibt sich aus ihrem Unterkühlungsverhalten. Generell ist für Latentwärmespeichermittel, die als temporärer Hitzeschutz eingesetzt werden sollen, eine gewisse Unterkühlung, also die Bildung einer metastabilen Schmelze erwünscht, weil die Kristallisationswärme dadurch erst mit Verzögerung wieder freigegeben wird. Diese Unterkühlung ist bei den reinen Substanzen verhältnismäßig gering (bis zu etwa 20 K), besitzt für eutektische Mischungen einen Maximalwert und verläuft bei untereutektischen oder übereutektischen Mischungen nahezu linear zum Mischungsverhältnis, wie dies in Fig. 1 am Beispiel des Systems Dulcit/Mannit dargestellt ist. Dort gibt die Kurve 1 den Verlauf der Schmelztemperatur und die Kurve 2 den Verlauf der Unterkühlungstemperatur (d.h. der Temperatur, bei der die metastabile Schmelze reproduzierbar und freiwillig in den kristallinen Zustand übergeht) jeweils in Abhängigkeit vom Mischungsverhältnis an. Durch Auswahl des Mischungsverhältnisses kann somit die

jeweils gewünschte Unterkühlung genau eingestellt werden, und zwar zweckmäßig derart, daß die Unterkühlungstemperatur gemäß Kurve 2 nicht unterhalb von etwa 50°C liegt. Dadurch wird erreicht, daß die Schmelze bei normaler Umgebungstemperatur mit Sicherheit in den kristallinen Zustand übergegangen ist und daß sich durch einfaches Befühlen der Latentwärmesenken von Hand kontrollieren läßt, ob dies der Fall ist.

Insgesamt erfüllen die erfindungsgemäß als Latentwärmespeichermittel vorgeschlagenen Alkohole die Anforderungen für den Einsatz in Hitzeschutzsystemen von Bohrlochsonden in idealer Weise. Sie decken den erforderlichen Temperaturbereich ab, zeichnen sich durch ungewöhnlich hohe volumenspezifische Schmelzenthalpien bei mäßiger Dichte aus, sind zyklenfest und weisen eine geringe Wärmeleitfähigkeit auf. Ihre Siedepunkte liegen teilweise beträchtlich über 300°C, wobei sich die Temperaturfestigkeit im wesentlichen bis in den Bereich des Siedepunktes erstreckt, und ihre Unterkühlung ist gezielt einstellbar. Außerdem werden Konstruktionswerkstoffe von ihnen nicht angegriffen und auch die physiologische Unbedenklichkeit ist gewährleistet. Damit erlauben sie nunmehr die Herstellung von Hitzeschutzsystemen mit erheblich verbesserter Standzeit und mit wesentlichen weiteren, bisher nicht möglich gewesenen Vorteilen.

**Tabelle 1**

**Konfigurationen**

| Mannit | Allit | Idit | Dulcit |
|---|---|---|---|
| 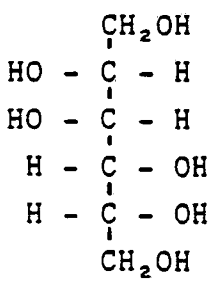 | 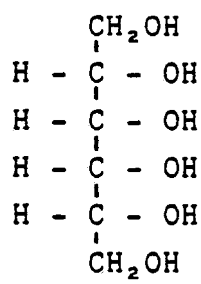 | 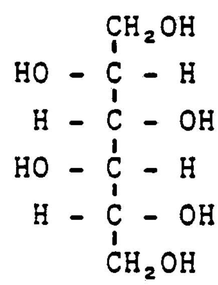 | 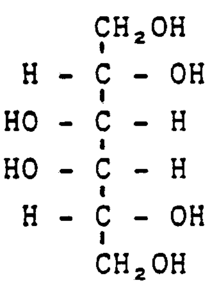 |

| Erythrit | Threit |
|---|---|
| 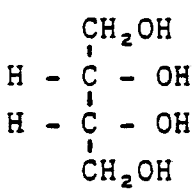 | 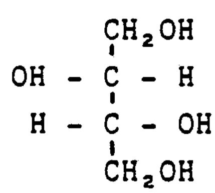 |

Tabelle 2

Daten

| Substanz | Schmelzpunkt (°C) | Dichte (kg/dm³) | Schmelzenthalpie (kJ/kg) | (kJ/dm³) |
|---|---|---|---|---|
| Threit (T) | 71 | 1,46 | 223 | 326 |
| Erythrit (E) | 119 | 1,46 | 334 | 488 |
| Mannit (M) | 167 | 1,50 | 306 | 459 |
| Dulcit (D) | 189 | 1,50 | 358 | 537 |
| Eutektika *) | | | | |
| M/D 50:50 | 153 | 1,50 | 282 | 423 |
| E/M 80:20 | 113 | 1,50 | | |
| E/D 80:20 | 115 | 1,50 | | |
| E/M/D 80:10:10 | 109 | 1,50 | 274 | 411 |

*) Die Zahlen geben das Molverhältnis der eutektischen Mischung an.

**Patentansprüche für die Vertragsstaaten: DE FR GB IT NL**

1. Latentwärmespeichermittel auf der Basis von mehrwertigen aliphatischen Alkoholen der allgemeinen Formel

$$H\left[-\overset{\displaystyle H}{\underset{\displaystyle OH}{C}}-\right]_n-H$$

mit n = 4, 6 oder 8 und mit solcher Konfigurationsisomerie, daß eine in bezug auf die Kettenmitte symmetrische Konfiguration besteht.

2. Latentwärmespeichermittel nach Anspruch 1, wobei die Konfiguration der Alkohole in bezug auf die Kettenmitte spiegelsymmetrisch ist.

3. Latentwärmespeichermittel nach Anspruch 1, wobei die Konfiguration der Alkohole in bezug auf die Kettenmitte achsensymmetrisch ist.

4. Latentwärmespeichermittel nach Anspruch 2, wobei der Alkohol Erythrit (n = 4) ist.

5. Latentwärmespeichermittel nach Anspruch 2, wobei der Alkohol Dulcit oder Allit (n = 6) ist.

6. Latentwärmespeichermittel nach Anspruch 3, wobei der Alkohol Threit (n = 4) ist.

7. Latentwärmespeichermittel nach Anspruch 3, wobei der Alkohol Idit oder Mannit (n = 6) ist.

8. Latentwärmespeichermittel nach einem der vorhergehenden Ansprüche, wobei zwei oder mehrere der Alkohole in Mischung miteinander vorliegen.

9. Latentwärmespeichermittel nach Anspruch 8, wobei mindestens einer der in der Mischung vorliegenden Alkohole eine spiegelsymmetrische Konfiguration besitzt.

10. Verwendung des Latentwärmespeichermittels nach einem oder mehreren der Ansprüche 1 bis 9 in Hitzeschutzsystemen für Meßsonden bei geotechnischen Tiefbohrungen.

**Patentansprüche für den Vertragsstaat: AT**

1. Latentwärmespeichermittel auf der Basis einer Mischung von zwei oder mehreren mehrwertigen aliphatischen Alkoholen der allgemeinen Formel

$$H\left[-\underset{OH}{\underset{|}{\overset{H}{\overset{|}{C}}}}-\right]_n-H$$

mit n = 4, 6 oder 8 und mit solcher Konfigurationsisomerie, daß eine in bezug auf die Kettenmitte symmetrische Konfiguration besteht.

2. Latentwärmespeichermittel nach Anspruch 1, wobei die Konfiguration von wenigstens einem Alkohol der Mischung in bezug auf die Kettenmitte spiegelsymmetrisch ist.

3. Latentwärmespeichermittel nach Anspruch 1, wobei die Konfiguration von wenigstens einem Alkohol der Mischung in bezug auf die Kettenmitte achsensymmetrisch ist.

4. Latentwärmespeichermittel nach Anspruch 2, wobei der wenigstens eine Alkohol Erythrit (n = 4) ist.

5. Latentwärmespeichermittel nach Anspruch 2, wobei der wenigstens eine Alkohol Dulcit oder Allit (n = 6) ist.

6. Latentwärmespeichermittel nach Anspruch 3, wobei der wenigstens eine Alkohol Threit (n = 4) ist.

7. Latentwärmespeichermittel nach Anspruch 3, wobei der wenigstens eine Alkohol Idit oder Mannit (n = 6) ist.

8. Verwendung des Latentwärmespeichermittels nach einem oder mehreren der Ansprüche 1 bis 7 in Hitzeschutzsystemen für Meßsonden bei geotechnischen Tiefbohrungen.

**Revendications pour les Etats contractants: DE FR GB IT NL**

1. Agent d'accumulation de chaleur latente à la base d'alcools aliphatiques polyvalentes de la formule générale

$$H\left[-\underset{OH}{\underset{|}{\overset{H}{\overset{|}{C}}}}-\right]_n-H$$

avec n = 4, 6 ou 8 et avec une telle isomérie de configuration qu'il existe une configuration symétrique par rapport au milieu de la chaîne.

2. Agent d'accumulation de chaleur latente suivant la revendication 1, dans lequel la configuration des alcools est symétriquement inversée par rapport au milieu de la chaîne.

3. Agent d'accumulation de chaleur latente suivant la revendication 1, dans lequel la configuration des alcools est symétrique relativement à l'axe par rapport au milieu de la chaîne.

4. Agent d'accumulation de chaleur latente suivant la revendication 2, dans lequel l'alcool est érythrite (n = 4).

5. Agent d'accumulation de chaleur latente suivant la revendication 2, dans lequel l'alcool est dulcite ou allitole (n = 6).

6. Agent d'accumulation de chaleur latente suivant la revendication 3, dans lequel l'alcool est thréitole (n = 4).

7. Agent d'accumulation de chaleur latente suivant la revendication 3, dans lequel l'alcool est idite ou mannite (n = 6).

8. Agent d'accumulation de chaleur latente de changement d'état suivant une des revendications précédentes, dans lequel deux ou plusieurs des alcools se présentent en mélange l'un avec l'autre.

9. Agent d'accumulation de chaleur latente de changement d'état suivant la revendication 8, dans lequel au moins un des alcools présent dans le mélange a une configuration symétriquement inversée.

10. Emploi de l'agent d'accumulation de chaleur latente suivant une ou plusieurs des revendications 1—9 dans des systèmes de protection de chaleur pour têtes de mesures dans le forage profond géotechnique.

**Revendications pour l'Etat contractant: AT**

1. Agent d'accumulation de chaleur latente à la base d'une mélange de deux ou plusieurs alcools aliphatiques polyvalentes de la formule générale

$$H\left[-\underset{OH}{\underset{|}{\overset{H}{\overset{|}{C}}}}-\right]_n-H$$

avec n = 4, 6 ou 8 et avec une telle isomérie de configuration qu'il existe une configuration symétrique par rapport au milieu de la chaîne.

2. Agent d'accumulation de chaleur latente suivant la revendication 1, dans lequel la configuration d'au moins un alcool est symétriquement inversée par rapport au milieu de la chaîne.

3. Agent d'accumulation de chaleur latente suivant la revendication 1, dans lequel la configuration d'au moins un alcool de la mélange est symétrique relativement à l'axe par rapport au milieu de la chaîne.

4. Agent d'accumulation de chaleur latente suivant la revendication 2, dans lequel au moins un alcool est érythrite (n = 4).

5. Agent d'accumulation de chaleur latente suivant la revendication 2, dans lequel au moins un alcool est dulcite ou allitole (n = 6).

6. Agent d'accumulation de chaleur latente suivant la revendication 3, dans lequel au moins un alcool est thréitole (n = 4).

7. Agent d'accumulation de chaleur latente suivant la revendication 3, dans lequel au moins un alcool est idite ou mannite (n = 6).

8. Emploi de l'agent d'accumulation de chaleur latente suivant une ou plusieurs des revendications 1—7 dans des systèmes de protection de chaleur pour têtes de mesures dans le forage profond géotechnique.

**Claims for the Contracting States: DE FR GB IT NL**

1. Latent heat storage medium on the basis of multivalent aliphatic alcohols having the general formula

$$H\left[-\overset{H}{\underset{OH}{C}}-\right]_n-H$$

wherein n = 4, 6 or 8 and wherein the isomeric configuration is symmetric with reference to the chain center.

2. Latent heat storage medium according to claim 1, at which the configuration of the alcohols is mirror-symmetric with reference to the chain center.

3. Latent heat storage medium according to claim 1, at which the configuration of the alcohols is axis-symmetric with reference to the chain center.

4. Latent heat storage medium according to claim 2, at which the alcohol is erythritol (n = 4).

5. Latent heat storage medium according to claim 2, at which the alcohols are dulcitol or allitol (n = 6).

6. Latent heat storage medium according to claim 3, at which the alcohol is threitol (n = 4).

7. Latent heat storage medium according to claim 3, at which the alcohols are iditol or mannitol (n = 6).

8. Latent heat storage medium according to one of the preceding claims, at which two or more alcohols exist in mixture with each other.

9. Latent heat storage medium according to claim 8, at which at least one in the form of a mixture with each other existing alcohol possesses a mirror-symmetric configuration.

10. Use of the latent heat storage medium according to one or more of the claims 1 to 9 in heat protection systems for bore-hole probes in deep geological wells.

**Claims for the Contracting State: AT**

1. Latent heat storage medium on the basis of a mixture of two or more multivalent aliphatic alcohols having the general formula

$$H\left[-\overset{H}{\underset{OH}{C}}-\right]_n-H$$

wherein n = 4, 6 or 8 and wherein the isomeric configuration is symmetric with reference to the chain center.

2. Latent heat storage medium according to claim 1, at which the configuration of the alcohols is mirror-symmetric with reference to the chain center.

3. Latent heat storage medium according to claim 1, at which the configuration of the alcohols is axis-symmetric with reference to the chain center.

4. Latent heat storage medium according to claim 2, at which the alcohol is erythritol (n = 4).

5. Latent heat storage medium according to claim 2, at which the alcohols are dulcitol or allitol (n = 6).

6. Latent heat storage medium according to claim 3, at which the alcohol is threitol (n = 4).

7. Latent heat storage medium according to claim 3, at which the alcohols are iditol or mannitol (n = 6).

8. Use of the latent heat storage medium according to one or more of the claims 1 to 9 in heat protection systems for bore-hole probes in deep geological wells.

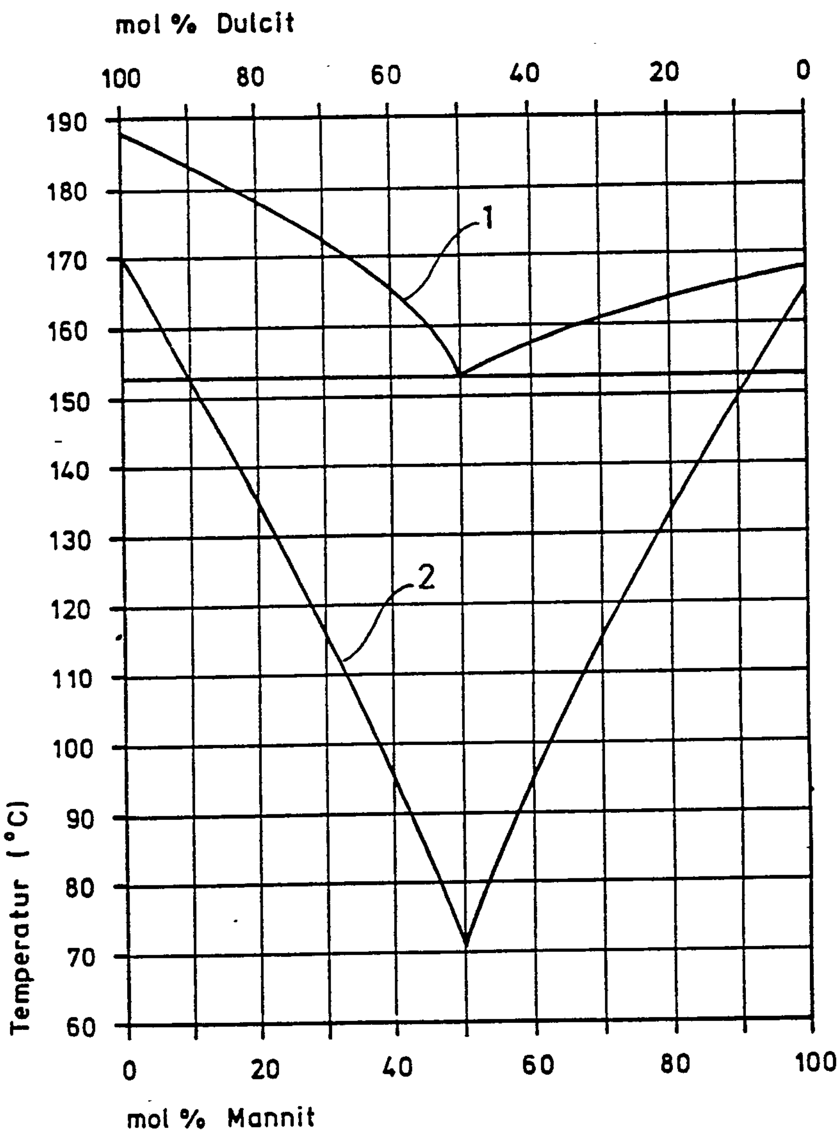
mol % Dulcit
100
80
60
40
20
0
190
180
170
160
150
140
130
120
110
100
90
80
70
60
Temperatur (°C)
1
2
0
20
40
60
80
100
mol % Mannit

Fig. 1